Europäisches Patentamt

European Patent Office

Office européen des brevets

(19)

(11) Numéro de publication : **0 375 492 B1**

## (12) FASCICULE DE BREVET EUROPEEN

(45) Date de publication du fascicule du brevet :
**21.09.94 Bulletin 94/38**

(51) Int. Cl.⁵ : **G02B 13/24, G11B 11/10**

(21) Numéro de dépôt : **89403363.8**

(22) Date de dépôt : **05.12.89**

(54) **Dispositif optique pour l'observation d'un objet allongé.**

(30) Priorité : **09.12.88 FR 8816218**

(43) Date de publication de la demande :
**27.06.90 Bulletin 90/26**

(45) Mention de la délivrance du brevet :
**21.09.94 Bulletin 94/38**

(84) Etats contractants désignés :
**DE FR GB IT NL**

(56) Documents cités :
**US-A- 4 610 515
US-A- 4 657 352
PATENT ABSTRACTS OF JAPAN, vol. 9, no. 76
(P-346)[1799], 5 avril 1985; & JP-A-59 208 523
IBM TECHNICAL DISCLOSURE BULLETIN,
VOL. 10, NO. 11, AVRIL 1968, PAGE 1750,
NEWYORK, US; B.R. BROWN ET AL.:
"MAGNETIC RECORDING AND OPTICAL
READOUT SYSTEM"
APPLIED OPTICS, VOL. 21, NO. 6, MARS 1982,
PAGES 999-1003,OPTICAL SOCIETY OF AME-
RICA, NEW YORK, US; D.T. MOORE ET AL.:
"RAY TRACING IN ANAMORPHIC GRA-
DIENT-INDEX MEDIA"**

(73) Titulaire : **THOMSON-CSF
173, Boulevard Haussmann
F-75008 Paris (FR)**

(72) Inventeur : **Lehureau, Jean-Claude
THOMSON-CSF
SCPI
Cédex 67
F-92045 Paris la Défense (FR)**
Inventeur : **Neubert, Sophie
THOMSON-CSF
SCPI
Cédex 67
F-92045 Paris la Défense (FR)**

(74) Mandataire : **Grynwald, Albert et al
THOMSON-CSF,
SCPI,
B.P. 329,
50, rue Jean-Pierre Timbaud
F-92402 Courbevoie Cédex (FR)**

EP 0 375 492 B1

**Description**

L'invention est relative à un dispositif optique pour l'observation d'un objet allongé, c'est-à-dire présentant des dimensions beaucoup plus importantes dans une direction que dans une autre.

L'observation des objets allongés (ou de zones allongées) est un problème courant. A titre d'exemple on citera la lecture optique de bandes magnétiques comme décrit dans le brevet français 84 08252 publié sous le n° 2 569 072. Ce brevet se rapporte à la lecture sur une bande magnétique, d'un grand nombre de pistes, par exemple 1 500, toutes parallèles à la direction longitudinale de la bande. Les informations contenues sur ces pistes peuvent être lues simultanément. Si sur les pistes un élément d'information est inscrit sur une longueur de l'ordre d'un micromètre et si la largeur de la bande est de l'ordre du centimètre on voit que pour la lecture simultanée des pistes il faut observer une zone large de 1 μm et longue de 1 cm.

Le problème de l'observation de tels objets allongés est difficile à résoudre car, du fait de la diffraction, si le champ d'observation d'un système optique augmente, sa résolution diminue.

On sait en effet que l'ouverture numérique α d'un système optique et la résolution d sont liées par la relation suivante :

$$d = \frac{1{,}22\,\lambda}{\alpha}$$

formule dans laquelle λ est la longueur d'onde de la lumière; il est aussi connu que plus l'ouverture numérique est grande et plus l'étendue du champ d'observation est faible.

Ainsi une bonne résolution semble incompatible avec un champ étendu. Dans l'exemple il semble difficile d'obtenir une résolution d'un micromètre environ alors que l'objet s'étend sur 1 cm.

Les documents JP-59 208523 et IBM Technical Disclosure Bulletin, vol. 10, N° 11, April 1968 décrivent des solutions à ce problème. Cependant il reste un problème d'astigmatisme qui n'est pas résolu.

L'invention permet d'obtenir une grande résolution avec un champ étendu et résout ce problème d'astigmatisme.

Elle consiste à appliquer sur l'objet, éventuellement par l'intermédiaire d'une plaque transparente, une lentille cylindrique ou analogue dont l'axe est selon la grande dimension de l'objet.

Dans un plan passant par l'axe de la lentille cylindrique, la convergence, et donc le grandissement, est négligeable alors que dans un plan perpendiculaire à l'axe, c'est-à-dire selon la petite dimension de l'objet à observer, la lentille est convergente avec un grandissement qui augmente la résolution. Cependant la distance focale de cette lentille cylindrique (distance considérée selon la petite dimension de l'objet) est faible par rapport à la distance focale de l'objectif d'observation afin que cette lentille cylindrique n'apporte pas d'aberration sensible à cet objectif.

La distance focale de la lentille cylindrique est de préférence comprise entre 100 μm et 1 mm.

Il est préférable que le rapport entre la distance focale de l'objectif et celle de la lentille cylindrique soit compris entre 10 et 100.

La solution de l'invention est extrêmement simple.

La lentille cylindrique allongée, pratiquement de mêmes dimensions que l'objet à observer, peut être constituée par une simple fibre optique qui, de préférence, présente un méplat selon sa longueur. Le méplat est par exemple selon un plan diamétral.

Cette fibre optique, présentant ou non un méplat selon sa grande dimension, peut être collée sur une lame transparente allongée.

Comme indiqué ci-dessus la lentille cylindrique fait partie d'un dispositif optique d'observation, et éventuellement d'illumination, de l'objet.

A cette lentille cylindrique peut être associée, pour l'observation, une deuxième lentille cylindrique, de réalisation plus classique, pour corriger l'astigmatisme introduit par la première lentille cylindrique couvrant l'objet à examiner. Cette deuxième lentille cylindrique est située entre l'objectif et la première lentille cylindrique. La perturbation introduite par la première lentille cylindrique étant faible, la convergence de la lentille cylindrique de correction est également faible.

D'autres caractéristiques et avantages de l'invention apparaîtront avec la description de certains de ses modes de réalisation, celle-ci étant effectuée en se référant aux dessins ci-annexés sur lesquels :

- la figure 1 est une vue schématique en perspective d'un dispositif optique selon l'invention,
- les figures 2, 3, 4 et 5 sont des schémas expliquant le fonctionnement du dispositif de la figure 1,
- la figure 6 est un schéma se rapportant à une application du dispositif de l'invention,
- les figures 7 et 8 sont des schémas analogues à ceux des figures 2 et 3 mais pour un autre mode de réalisation,
- la figure 9 est un dispositif optique selon l'invention pour l'observation en réflexion d'un objet à l'aide d'un dispositif selon l'invention, et
- la figure 10 est un schéma d'une bande magnétique lisible à l'aide d'un dispositif selon l'invention.

Les exemples que l'on va décrire en relation avec les figures se rapportent à la lecture d'une bande magnétique 10 (figure 10) sur laquelle sont inscrites des informations binaires suivant des pistes longitudinales $11_1$, $11_2$, etc... La piste 10 a une largeur totale L de l'ordre de 1 cm. La largeur 1 de chaque piste 11 est dans l'exemple de l'ordre de 6 μm tandis que sur chaque piste 11 le pas des informations est de l'ordre du micromètre.

La lecture des informations sur la piste 10 est effectuée simultanément sur l'ensemble des pistes en observant à chaque instant une zone 12 couvrant la largeur L de la bande 10 et de longueur $l_1$ (dimension selon la direction de la bande) de l'ordre du micromètre.

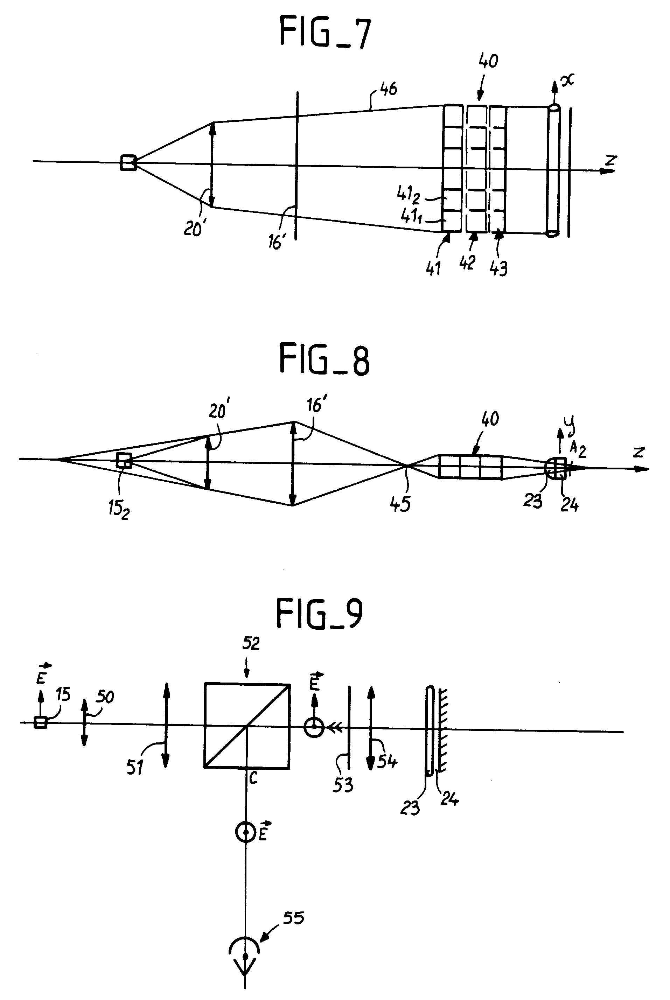

Pour cette lecture des informations dans la zone 12 on utilise un dispositif optique du type de celui décrit dans le brevet français mentionné ci-dessus. A cet effet la bande 10 se déplace devant un substrat 13 (figure 6) en ferrite. Les divers domaines de la bande 10 induisent dans ce substrat 13 en ferrite des domaines magnétiques qui sont observés optiquement, grâce à l'effet Faraday, comme décrit plus loin en relation avec la figure 9.

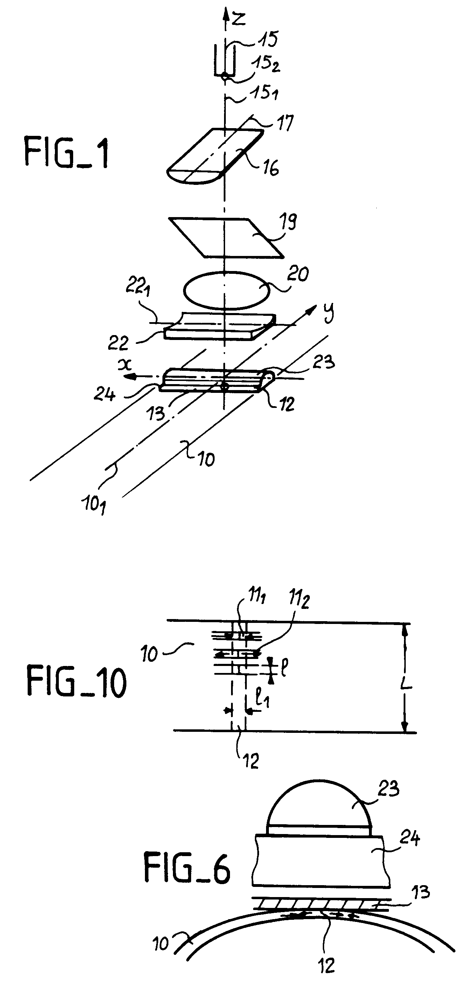

On va maintenant décrire en relation avec la figure 1 une partie du dispositif d'observation de la zone allongée, pratiquement linéaire, 12.

Pour l'éclairage de cette zone 12 on prévoit un laser 15 éclairant une lentille cylindrique 16 dont l'axe 17 est parallèle à la direction longitudinale $10_1$ ($O_y$) de la bande 10.

L'axe $15_1$ du faisceau émis par le laser 15 est perpendiculaire au plan de la zone 12 et la coupe en son milieu.

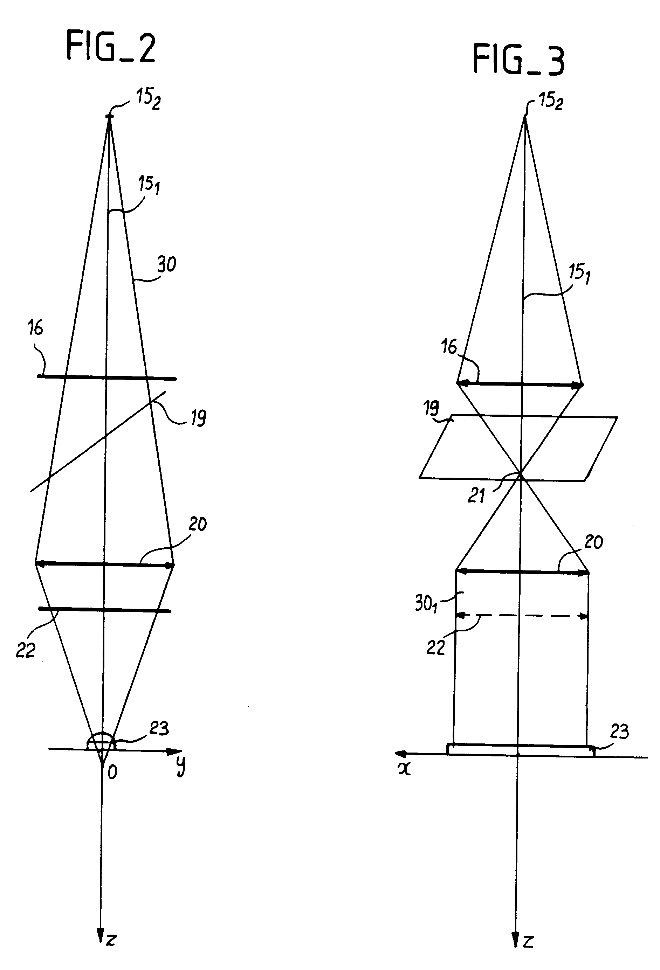

La lentille cylindrique 16 est suivie par une lame semi-transparente 19 inclinée à 45° par rapport à l'axe $15_1$. Cette lame 19 sert à l'observation. Après la lame 19 se trouve un objectif 20 du type objectif de microscope dont la position est telle que l'image de la source ponctuelle, virtuelle, $15_2$ que constitue le laser par rapport à cet objectif 20 se trouve pratiquement dans le plan de la bande 10, comme représenté sur la figure 2. En outre le foyer objet 21 (figure 3) de cet objectif 20 a la même abscisse sur l'axe $15_1$ que le foyer image de la lentille cylindrique 16, dans le plan xOz contenant l'axe $15_1$ et la direction longitudinale Ox de la zone 12.

Cet objectif 20 est suivi par une autre lentille cylindrique 22 d'axe $22_1$ parallèle à la direction longitudinale Ox de la zone 12. Enfin une lentille cylindrique allongée 23 ayant une longueur au moins égale à celle de la zone 12 à observer ou analyser est associée, par exemple par collage, à une plaque transparente 24 de même longueur et au moins de même largeur qui est elle-même disposée sur la plaque 13 en ferrite au droit de la zone 12 de la bande 10.

Pour expliquer le fonctionnement du dispositif représenté sur la figure 1 on fera appel aux schémas des figures 2, 3, 4 et 5.

Le schéma de la figure 2 illustre le fonctionnement dans le plan yOz, c'est-à-dire dans le plan passant par l'axe longitudinal $10_1$ de la bande 10 et perpendiculaire à cette dernière. La figure 3 montre le fonctionnement dans le plan xOz, c'est-à-dire dans le plan passant par l'axe longitudinal de la lentille cylindrique allongée 23 et perpendiculaire à la bande 10.

Dans le plan yOz (figure 2) le faisceau laser 30 issu de la source $15_2$ n'est pas dévié par la lentille cylindrique 16; il traverse la lame semi-transparente 19 et est concentré sur la bande 10 par l'objectif 20 et par la lentille cylindrique 23 qui est convergente dans ce plan yOz.

Dans le plan xOz (figure 3) la lentille cylindrique 16 est convergente et l'image de la source $15_2$ que fournit cette lentille 16 se trouve au foyer 21 de l'objectif 20.

Ainsi dans ce plan xOz l'objectif 20 renvoie le faisceau laser $30_1$ sous forme d'un faisceau parallèle de largeur suffisante pour couvrir toute la longueur de la lentille cylindrique 23. Dans ce plan la lentille cylindrique 23 n'a pratiquement pas d'effet de convergence.

En l'absence de la lentille cylindrique 23 la résolution dans la direction Ox serait $\frac{\lambda}{\alpha}$, $\alpha$ étant l'ouverture numérique de la lentille cylindrique 16 tandis que dans la direction Oy la résolution serait $\frac{\lambda}{\alpha'}$, $\alpha'$ étant l'ouverture numérique de l'objectif 20.

La présence de l'ensemble lentille cylindrique 23, lame à faces parallèles 24 ne modifie pas la résolution dans la direction Ox. Par contre dans la direction Oy la résolution est augmentée proportionnellement au grandissement g de l'ensemble lentille cylindrique 23, lame à faces parallèles 24.

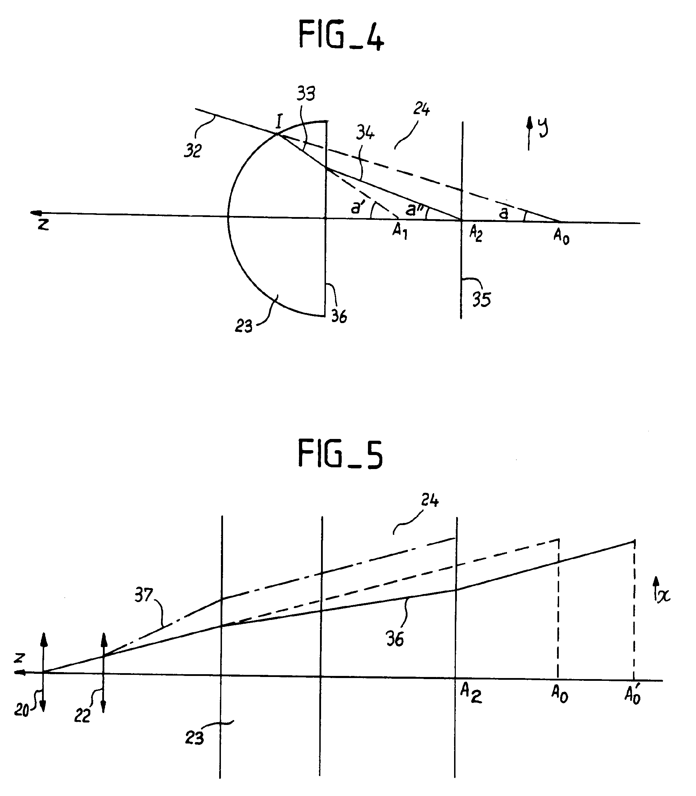

On a représenté sur la figure 4 le schéma des rayons lumineux dans le plan yOz pour la lentille cylindrique 23 et la lame 24.

Un rayon lumineux incident 32 formant un angle a avec l'axe Oz se réfracte en 33 à l'intérieur de la lentille 23 d'indice de réfraction $n_1$ et forme alors un angle a' avec l'axe Oz. Ce rayon 33 subit une réfraction lorsqu'il pénètre dans la lame 24 et change donc de direction. Dans la lame 24 le rayon 34 forme un angle a'' avec l'axe Oz.

Le grandissement de l'ensemble 23, 24 est :

$$g = \frac{a}{a''}$$

Le système optique est tel que l'image $A_2$ de la source $15_2$ se trouve dans la face de sortie 35 (figure 4) de la lame 24.

Pour une ouverture numérique incidente $\alpha = 0{,}1$ de la lentille cylindrique 16 on peut aisément réaliser un ensemble lentille cylindrique 23, lame 24 ayant un grandissement allant jusqu'à au moins environ 6,5. En d'autres termes on peut donc aisément augmenter la résolution dans la direction Oy de cette même quantité.

Dans le mode de réalisation préféré la lentille cylindrique 23 est constituée par une simple fibre optique qui a été tronquée par polissage de façon à présenter un méplat 36 par exemple dans un plan diamétral. La fibre optique est du type ordinaire, avec un indice constant $n_1$.

La zone 12 éclairée par le faisceau laser renvoie une image à travers la lame 24, la lentille cylindrique 23, la lentille cylindrique 22 et l'objectif 20 vers la lame 19. Cette dernière constitue un miroir réfléchissant les rayons lumineux vers une ligne de détecteurs CCD (non représentés). Le miroir 19 forme une image de la ligne 21 sur lesdits détecteurs CCD.

La lentille cylindrique 22 corrige l'astigmatisme apporté par l'ensemble lentille cylindrique allongée 23, lame 24.

Ce défaut d'astigmatisme apparaît clairement sur les figures 4 et 5. Dans le plan yOz l'image de la source $15_2$ est au point $A_2$ sur la face 35 de la lame 24 tandis que dans le plan xOz (figure 5) l'image est décalée au point $A'_0$.

La lentille cylindrique 22 a une distance focale et une position telles que dans le plan xOz l'image $A'_0$ ait, sur l'axe Oz, la même abscisse que l'image $A_2$. Sur la figure 5 on a représenté en traits pleins 36, le trajet des rayons lumineux si on ne tient pas compte de la lentille cylindrique 22 où l'on voit alors la formation d'une image $A'_0$. Le trajet 37 en traits mixtes correspond au trajet réel en présence de la lentille cylindrique 22 où l'image définitive est formée en $A_2$ dans ledit plan xOz.

On peut noter aussi que le montage est tel qu'il permet de corriger aisément les aberrations sphériques. On rappelle ici que l'aberration sphérique d'un montage optique est celle qui provient du fait que la convergence selon l'axe optique n'est pas la même que la convergence selon des directions s'écartant de l'axe optique.

Avec le montage de l'invention l'aberration de sphéricité est introduite principalement par la fibre 23 et la lame 24.

Si les indices $n_1$ des fibres 23 et $n_2$ de la lame 24 sont de valeurs différentes, l'aberration sphérique introduite par la lentille cylindrique 23 est positive (augmentation de la convergence par rapport à la convergence du faisceau paraxial) tandis que l'aberration introduite par la lame 24 est négative (diminution de la convergence par rapport à la convergence du faisceau paraxial). Ainsi on peut minimiser l'aberration sphérique par un choix approprié des épaisseurs, c'est-à-dire des dimensions selon l'axe Oz, de la fibre et de la lame.

L'aberration de sphéricité peut en pratique être corrigée complètement en choisissant, pour réaliser la lentille cylindrique 23, une fibre optique dont le coeur présente un indice inférieur à celui de la gaine.

Par exemple une fibre optique de rayon 13μm, d'indice constant $n_1 = 1,45$ et polie de façon que son épaisseur en direction Oz soit égale au rayon puis collée sur une lame 24 d'indice $n_2 = 1,964$ (grenat de gadolinium et de gallium) fournit un écart normal d'aberration sphérique de 0,16 λ avec un grandissement de 4 et une ouverture numérique incidente de 0,1.

Si la lame 24 a un indice $n_2 = 1,45$, dans les mêmes conditions l'écart normal d'aberration sphérique est de 0,37 λ .

Pour l'objectif 20 la perturbation qu'introduit, dans le plan yOz, la lentille cylindrique 23 est faible. Il n'est ainsi pas nécessaire de prendre des précautions particulières de correction d'aberrations pour l'objectif 20. D'ailleurs cette aberration est, pour l'observation sur le(s) détecteur (s), corrigée par la lentille 22 de faible vergence.

La variante représentée sur les figures 7 et 8 se distingue de la réalisation décrite ci-dessus en relation notamment avec la figure 1 par le fait que l'objectif 20' se trouve en amont de la lentille cylindrique 16' et qu'on prévoit un montage optique 40 permettant d'augmenter le champ sans altérer la résolution dans la direction Oy. En d'autres termes la réalisation représentée sur les figures 7 et 8 permet l'observation d'une plus grande longueur (direction Ox) de zone 12.

Le montage 40 est constitué par trois ensembles 41, 42 et 43 de fibres optiques de type "selfoc".

Chaque ensemble 41, 42, 43 est formé d'une multiplicité de fibres $41_1$, $41_2$, etc... d'axes parallèles à l'axe Oz et dans le plan yOz. Le nombre de fibres est le même dans les ensembles 41, 42 et 43 et la disposition est telle qu'à chaque fibre d'un ensemble corresponde une fibre des deux autres ensembles de même axe.

Le nombre de fibres dans un ensemble est par exemple de six.

Une fibre "selfoc" est une fibre optique à indice variant selon sa longueur. Elle est stigmatique suivant un pas donné.

Chaque élément de fibre constitue une lentille dont la distance focale f est fonction de sa longueur.

Le montage 40 est tel que son grandissement est égal à + 1 et son rôle est à la fois d'éclairer la zone 12 et d'en former une image sur une ligne de détecteurs comme décrit précédemment.

Dans le plan yOz (figure 8) l'ensemble de l'objectif 20' et de la lentille cylindrique 16' forme une image 45 de la source laser $15_2$. Le montage 40, de grandissement + 1, avec la fibre 23 et la lame 24 imagent ce point 45 à l'abscisse $A_2$.

Dans le plan xOz (figure 7) la lentille 16' n'a pas d'effet et l'ouverture du faisceau 46 atteignant le montage 40 est faible, ce qui permet dans la direction x un grand champ d'observation et donc, comme mentionné ci-dessus, une plus grande longueur d'observation de zone 12.

Dans un exemple le montage permet d'éclairer une longueur de 2 cm en direction Ox avec une ouverture numérique de 0,1 et une distance de 10 cm entre la source $15_2$ et le montage 40.

Si on utilise une diode laser dont l'angle de divergence du faisceau est de 0,5 radian, l'objectif 20' de focale 10 mm diminue cette divergence. La source laser sera alors à 8 mm de l'objectif et le point image 45 n'est qu'à 40 mm de cet objectif. Dans ce cas la distance entre le laser 15 et le montage 40 sera de 60 mm; ainsi l'ensemble est compact.

La figure 9 représente un montage pour l'observation en réflexion de la zone 12 avec un laser 15, un objectif 50 et une lentille cylindrique 51, un cube 52 séparateur de polarisation, une lame déphasante 53, un objectif de focalisation 54, le montage à fibre optique 23 et lame 24, et un dispositif de détection 55 tel qu'une caméra ou une ligne de détecteurs CCD.

Le laser 15 émet un faisceau lumineux polarisé linéairement (vecteur $\vec{E}$ sur la figure 9). La direction de polarisation est conservée après le passage dans le cube 52. Mais la lame 53 fait tourner la polarisation d'un angle $\beta$ .

Après réflexion le faisceau est de nouveau déphasé d'un angle $\beta$ par la lame 53 puis il est renvoyé par le cube 52 vers le détecteur 55.

La quantité de lumière recueillie par le détecteur 55 est proportionnelle au sinus du déphasage introduit par la lame 53.

Le déphasage peut être introduit par l'objet 12 lui-même. Dans ce cas on peut se passer de la lame 53.

Si on utilise un montage 40 d'augmentation du champ, le cube 52 séparateur de polarisation est disposé entre le foyer de la lentille 16' et le montage 40.

Il est à noter que si la lame 24 présente un indice de réfraction voisin de 2, il est préférable d'observer l'objet allongé en réflexion plutôt qu'en transmission car, dans ce dernier cas, il peut se produire un phénomène de réflexion totale qui empêche ou limite la transmission.

Quel que soit son mode de réalisation, le dispositif selon l'invention augmente la résolution dans la plus petite dimension. En outre, il permet l'obtention d'une image lumineuse, l'éclairement étant multiplié par le grandissement g du montage à lentille cylindrique 23.

En plus de l'application déjà mentionnée à la lecture optique de bandes magnétiques, on signalera, de façon plus générale l'observation d'une image ligne par ligne, la lentille cylindrique allongée 23 étant, par exemple, à chaque fois déplacée d'environ 1µm ou, inversement, l'objet déplacé pas à pas d'un micron à chaque observation.

Dans un exemple correspondant au premier mode de réalisation décrit en relation avec la figure 1, on a obtenu un champ d'observation dans la direction Ox d'1 cm avec une résolution de 7,8µm dans cette direction Ox et une résolution de 1,95 µm dans l'autre direction Oy, et cela avec une diode laser émettant un rayonnement de longueur d'onde 0,78µm, une lentille cylindrique et un objectif de focalisation d'ouverture numérique de 0,1, une fibre 23 d'indice 1,45 polie dans un plan diamétral avec un rayon de 130 µm.

Avec le second mode de réalisation (figures 7 et 8) on peut obtenir avec les mêmes données une résolution de même valeur mais un champ deux fois plus important.

Le collage de la fibre 23 sur la lame 24 s'effectue par exemple avec une colle à film mince polymérisable au rayonnement UV.

Dans tous les modes de réalisation, le système optique d'observation est très simple. Dans le cas de la figure 1 il comprend essentiellement l'objectif 20 et la lentille cylindrique 23. Dans le cas de la figure 7, il comprend l'objectif 20' et la lentille cylindrique 40 et dans le cas de la figure 9, l'objectif 54 et la lentille cylindrique 23. Ce montage est pratiquement sans aberration notamment parce que la lentille cylindrique 23 introduit un minimum d'aberrations, le rapport entre la distance focale de l'objectif et la distance focale de la lentille cylindrique étant important, de préférence compris entre 10 et 100.

**Revendications**

1. Dispositif d'observation d'un objet allongé ou d'une zone (12) allongée d'objet comprenant
   - un objectif (20, 20', 54),
   - une première lentille cylindrique (23) ou analogue dont la distance focale est faible par rapport à celle de l'objectif (20, 20', 54), dont l'axe s'étend selon la plus grande dimension (Ox) de l'objet ou la zone et située au voisinage ou en contact avec l'objet ou la zone,
   - une deuxième lentille cylindrique (22) permettant de corriger l'astigmatisme introduit par la première lentille cylindrique (23), caractérisé en ce que la deuxième lentille cylindrique (22) est située entre l'objectif (20) et la première lentille cylindrique (23).

2. Dispositif selon la revendication 1, caractérisé en ce que la deuxième lentille cylindrique (22) est une lentille divergente dont l'axe est parallèle à l'axe de la première lentille cylindrique (23).

3. Dispositif selon la revendication 1, caractérisé en ce que la deuxième lentille cylindrique (22) est une lentille convergente dont l'axe est perpendiculaire à l'axe de la première lentille cylindrique.

4. Dispositif selon la revendication 1, caractérisé en ce que le rapport entre la distance focale de l'objectif et la distance focale de la première lentille cylindrique (23) est compris entre 10 et 100.

5. Dispositif selon la revendication 1 ou 5, caractérisé en ce que la distance focale de la première lentille cylindrique est comprise entre 100 µm et 1 mm et de préférence de l'ordre de 150 µm.

6. Dispositif selon la revendication 1, caractérisé en ce que la première lentille cylindrique est constituée par une fibre optique.

7. Dispositif selon la revendication 6, caractérisé en ce que la fibre optique présente un méplat parallèle à l'objet ou la zone (12).

8. Dispositif selon la revendication 8, caractérisé en ce que le méplat ou plan de base comprend l'axe de la fibre optique.

9. Dispositif selon l'une quelconque des revendications précédentes, caractérisé en ce que la première lentille cylindrique est associée à une lame transparente (24) ayant pratiquement les mêmes dimensions que l'objet ou la zone à observer.

10. Dispositif selon la revendication 10, caractérisé en ce que les indices de réfraction de la première lentille cylindrique (23) et de la lame transparente (24) sont différents.

11. Dispositif selon la revendication 9 ou 10, caractérisé en ce que la première lentille cylindrique (23) est collée à la lame transparente (24).

12. Dispositif selon l'une quelconque des revendications précédentes, caractérisé en ce qu'il comporte, pour l'éclairage de l'objet ou zone à travers ladite lentille cylindrique (23), une source de lumière (15) telle qu'un laser, une troisième lentille cylindrique (16) de mise en forme rectiligne du faisceau de lumière et un objectif de focalisation (20), l'axe (17) de la lentille cylindrique (16) de mise en forme du faisceau lumineux étant perpendiculaire à l'axe de la première lentille cylindrique (23) au voisinage de l'objet ou zone à observer.

13. Dispositif selon la revendication 12, caractérisé en ce que, dans un plan passant par l'axe (17) de la lentille cylindrique (16) de mise en forme, l'image ($A_2$) de la source ($15_2$) par rapport à l'ensemble optique comprenant l'objectif (20) et la lentille cylindrique (23), se trouve sur ledit objet ou zone ou au voisinage de l'objet ou zone et en ce que, dans un plan perpendiculaire, l'image de la source ($15_2$) par rapport à la lentille cylindrique (16) se trouve au foyer (21) de l'objectif (20) de focalisation.

14. Dispositif selon la revendication 6, caractérisé en ce que l'indice du coeur de la fibre optique est inférieur à l'indice de la gaine de cette même fibre.

15. Dispositif selon l'une quelconque des revendications précédentes, caractérisé en ce qu'il comprend un montage optique (40) d'élargissement de champ d'observation disposé entre la lentille cylindrique (23) et l'objectif (20').

16. Dispositif selon la revendication 15, caractérisé en ce que le montage (40) d'élargissement du champ comporte un ensemble de lignes de fibres optiques à gradient d'indice selon leur longueur, le grandissement de ce montage étant égal à 1.

17. Dispositif selon l'une quelconque des revendications précédentes, caractérisé en ce qu'il est destiné à l'observation d'un objet dont les dimensions selon une direction sont de l'ordre du centimètre et les dimensions selon l'autre direction sont de l'ordre du micron.

18. Application du dispositif selon l'une quelconque des revendications précédentes, à la lecture optique par réflexion d'un support magnétique.

19. Application du dispositif selon la revendication 18, caractérisé en ce que le support magnétique comporte différentes pistes d'informations ($11_1$, $11_2$), une zone (12) à lire étant transversale aux pistes d'informations.

20. Application du dispositif selon la revendication 19, caractérisé en ce que le support magnétique est une bande magnétique comportant des pistes longitudinales d'informations, chaque zone (12) couvrant la largeur de la bande.

21. Application du dispositif selon la revendication 20, caractérisé en ce que la largeur de la bande est de l'ordre de 1cm et la dimension de la zone (12) selon la direction longitudinale de la bande est de l'ordre du micromètre.

**Patentansprüche**

1. Vorrichtung zum Beobachten eines ausgedehnten Objekts oder einer ausgedehnten Objektzone (12), enthaltend
   - ein Objektiv (20, 20', 54),
   - eine erste zylindrisch oder analog geformte Linse (23), deren Brennweite klein gegenüber der des Objektivs (20, 20', 54) ist und deren Achse sich längs der größten Abmessung (Ox) des Objekts oder der Zone erstreckt und nahe bei oder in Kontakt mit dem Objekt oder der Zone liegt,
   - eine zweite zylindrische Linse (22), die es ermöglicht, den durch die erste zylindrische Linse (23) eingeführten Astigmatismus zu korrigieren, dadurch gekennzeichnet, daß die zweite zylindrische Linse (22) zwischen dem Objektiv (20) und der ersten zylindrischen Linse (23) liegt.

2. Vorrichtung nach Anspruch 1, dadurch gekennzeichnet, daß die zweite zylindrische Linse (22) eine divergierende Linse ist, deren Achse parallel zur Achse der ersten zylindrischen Linse (23) verläuft.

3. Vorrichtung nach Anspruch 1, dadurch gekennzeichnet, daß die zweite zylindrische Linse (22) eine konvergierende Linse ist, deren Achse senkrecht zur Achse der ersten zylindrischen Linse verläuft.

4. Vorrichtung nach Anspruch 1, dadurch gekennzeichnet, daß das Verhältnis zwischen der Brennweite des Objektivs und der Brennweite der ersten zylindrischen Linse (23) zwischen 10 und 100 liegt.

5. Vorrichtung nach Anspruch 1 oder 5, dadurch gekennzeichnet, daß die Brennweite der ersten zylindrischen Linse zwischen 100 μm und 1 mm und vorzugsweise in der Größenordnung von 150 μm liegt.

6. Vorrichtung nach Anspruch 1, dadurch gekennzeichnet, daß die erste zylindrische Linse von einer Lichtleitfaser gebildet ist.

7. Vorrichtung nach Anspruch 6, dadurch gekennzeichnet, daß die Lichtleitfaser eine parallel zum Objekt oder zur Zone (12) verlaufende Abflachung aufweist.

8. Vorrichtung nach Anspruch 8, dadurch gekennzeichnet, daß die Abflachung oder Basisebene die Achse der Lichtleitfaser enthält.

9. Vorrichtung nach einem der vorhergehenden Ansprüche, dadurch gekennzeichnet, daß die erste zylindrische Linse einer transparenten Platte (24) zugeordnet ist, die praktisch die gleichen Abmessungen wie das zu beobachtende Objekt oder die zu beobachtende Zone hat.

10. Vorrichtung nach Anspruch 10, dadurch gekennzeichnet, daß die Brechungsindizes der ersten zylindrischen Linse (23) und der transparenten Platte (24) unterschiedlich sind.

11. Vorrichtung nach Anspruch 9 oder 10, dadurch gekennzeichnet, daß die erste zylindrische Linse (23) an die transparente Platte (24) geklebt ist.

12. Vorrichtung nach einem der vorhergehenden Ansprüche, dadurch gekennzeichnet, daß sie zum Beleuchten des Objekts oder der Zone durch die zylindrische Linse (23) hindurch eine Lichtquelle (15) wie einen Laser, eine dritte zylindrische Linse (16) zum Geraderichten des Lichtstrahlenbündels und ein Fokussierungsobjektiv (20) aufweist, wobei die Achse (17) der zylindrischen Linse (16) zur Formung des Lichtstrahlenbündels senkrecht zur Achse der ersten zylindrischen Linse (23) nahe dem zu beobachtenden Objekt oder der zu beobachtenden Zone verläuft.

13. Vorrichtung nach Anspruch 12, dadurch gekennzeichnet, daß in einer von der Achse (17) der zylindrischen Formungslinse (16) durchlaufenen Ebene das Bild ($A_2$) der Quelle (152) bezüglich der optischen Gruppe mit dem Objektiv (20) und der zylindrischen Linse (23) auf dem Objekt oder der Zone oder in der Nähe des Objekts oder der Zone liegt, und daß in einer senkrechten Ebene das Bild der Quelle ($15_2$) bezüglich der zylindrischen Linse (16) im Brennpunkt (21) des Fokussierungsobjektivs (20) liegt.

14. Vorrichtung nach Anspruch 6, dadurch gekennzeichnet, daß der Brechungsindex des Kerns der Lichtleitfaser kleiner als der Brechungsindex des Mantels der gleichen Faser ist.

15. Vorrichtung nach einem der vorhergehenden Ansprüche, dadurch gekennzeichnet, daß sie zwischen der zylindrischen Linse (23) und dem Objektiv (20') einen optischen Aufbau (40) zur Erweiterung des Beobachtungsfeldes enthält.

16. Vorrichtung nach Anspruch 15, dadurch gekennzeichnet, daß der optische Aufbau (40) zur Erweiterung des Feldes eine Gruppe von Lichtleitfaserleitungen mit Indexgradient entlang ihrer Länge enthält, wobei die Vergrößerung dieses Aufbaus gleich 1 ist.

17. Vorrichtung nach einem der vorhergehenden Ansprüche, dadurch gekennzeichnet, daß sie zur Beobachtung eines Objekts bestimmt ist, dessen Abmessungen längs einer Richtung der Größenordnung von Zentimetern liegen und dessen Abmessungen in der anderen Richtung in der Größenordnung von Mikron liegen.

18. Anwendung der Vorrichtung nach einem der vorhergehenden Ansprüche zum optischen Lesen eines magnetischen Trägers durch Reflexion.

19. Anwendung der Vorrichtung nach Anspruch 18, dadurch gekennzeichnet, daß der magnetische Träger verschiedene Informationsspuren ($11_1$, $11_2$) aufweist, wobei eine Lesezone (12) quer zu den Informationsspuren verläuft.

20. Anwendung der Vorrichtung nach Anspruch 19, dadurch gekennzeichnet, daß der magnetische Träger ein Magnetband ist, das in Längsrichtung verlaufende Informationsspuren aufweist, wobei jede Zone (12) die Breite des Bandes überdeckt.

21. Anwendung der Vorrichtung nach Anspruch 20, dadurch gekennzeichnet, daß die Breite des Bandes in der Größenordnung von 1 cm liegt und die Abmessung der Zone (12) in der Längsrichtung des Bandes in der Größenordnung von Mikrometer liegt.

**Claims**

1. Device for observing an elongate object or an elongate zone (12) of an object, comprising
   - an objective (20, 20′, 54),
   - a first cylindrical or similar lens (23), the focal length of which is short in relation to that of the objective (20, 20′, 54), the axis of which extends along the greatest dimension (Ox) of the object or the zone, and situated in the vicinity of or in contact with the object or the zone,
   - a second cylindrical lens (22) making it possible to correct the astigmatism introduced by the first cylindrical lens (23), characterized in that the second cylindrical lens (22) is situated between the objective (20) and the first cylindrical lens (23).

2. Device according to Claim 1, characterized in that the second cylindrical lens (22) is a diverging lens, the axis of which is parallel to the axis of the first cylindrical lens (23).

3. Device according to Claim 1, characterized in that the second cylindrical lens (22) is a converging lens, the axis of which is perpendicular to the axis of the first cylindrical lens.

4. Device according to Claim 1, characterized in that the ratio between the focal length of the objective and the focal length of the first cylindrical lens (23) lies between 10 and 100.

5. Device according to Claim 1 or 2, characterized in that the focal length of the first cylindrical lens lies between 100 μm and 1 mm and is preferably of the order of 150 μm.

6. Device according to Claim 1, characterized in that the first cylindrical lens consists of an optical fibre.

7. Device according to Claim 6, characterized in that the optical fibre exhibits a flattened portion parallel to the object or the zone (12).

8. Device according to Claim 7, characterized in that the flattened portion or base plane includes the axis of the optical fibre.

9. Device according to any one of the preceding claims, characterized in that the first cylindrical lens is associated with a transparent plate (24) having virtually the same dimensions as the object or the zone to be observed.

10. Device according to Claim 9, characterized in that the refractive indices of the first cylindrical lens (23) and of the transparent plate (24) are different.

11. Device according to Claim 9 or 10, characterized in that the first cylindrical lens (23) is adhesively bonded to the transparent plate (24).

12. Device according to any one of the preceding claims, characterized in that it includes, for the illumination of the object or zone through said cylindrical lens (23), a light source (15) such as a laser, a third cylindrical lens (16) for the rectilinear shaping of the light beam and a focusing objective (20), the axis (17) of the cylindrical lens (16) for shaping the light beam being perpendicular to the axis of the first cylindrical lens (23) in the vicinity of the object or zone to be observed.

13. Device according to Claim 12, characterized in that, in a plane passing through the axis (17) of the shaping cylindrical lens (16), the image ($A_2$) of the source ($15_2$) in relation to the optical assembly comprising the objective (20) and the cylindrical lens (23) is situated on said object or zone or in the vicinity of the object or zone, and in that, in a perpendicular plane, the image of the source ($15_2$) in relation to the cylindrical lens (16) is situated at the focus (21) of the focusing objective (20).

14. Device according to Claim 6, characterized in that the index of the core of the optical fibre is lower than the index of the sheath of this same fibre.

15. Device according to any one of the preceding claims, characterized in that it comprises an optical assembly (40) for broadening the field of observation, disposed between the cylindrical lens (23) and the objective (20′).

16. Device according to Claim 15, characterized in that the assembly (40) for broadening the field includes a set of lines of optical fibres with an index gradient along their length, the magnification of this system being equal to 1.

17. Device according to any one of the preceding claims, characterized in that it is intended for the observation of an object, the dimensions. of which along one direction are of the order of one centimetre and the dimensions of which along the other direction are of the order of one micron.

18. Application of the device according to any one of the preceding claims, to the optical reading by reflection of a magnetic medium.

19. Application of the device according to Claim 18, characterized in that the magnetic medium includes differing information tracks ($11_1$, $11_2$), a zone (12) to be read being transverse to the information tracks.

20. Application of the device according to Claim 19, characterized in that the magnetic medium is a magnetic tape including longitudinal information tracks, each zone (12) covering the width of the tape.

21. Application of the device according to Claim 20, characterized in that the width of the tape is of the order of 1 cm and the dimension of the zone (12) along the longitudinal direction of the tape is of the order of one micrometre.

FIG_1

FIG_10

FIG_6

FIG_2

FIG_3

EP 0 375 492 B1

# FIG_4

# FIG_5

## FIG_7

## FIG_8

## FIG_9